# EUROPÄISCHE PATENTSCHRIFT

(11) **EP 1 070 070 B1**
(45) Veröffentlichungstag und Bekanntmachung des Hinweises auf die Patenterteilung: **23.07.2008**
(21) Anmeldenummer: 99914565.9
(22) Anmeldetag: 01.04.1999
(51) Int. Cl.: C07F 3/02, C07B 49/00, C07B 61/00

(54) **VERFAHREN ZUR HERSTELLUNG VON GRIGNARDVERBINDUNGEN**
METHOD FOR PRODUCING GRIGNARD COMPOUNDS
PROCEDE DE PRODUCTION DE COMPOSES DE GRIGNARD

(30) Priorität: 06.04.1998 DE 19815078; 14.04.1998 DE 19816414; 12.08.1998 DE 19836408
(43) Veröffentlichungstag der Anmeldung: 24.01.2001
(73) Patentinhaber: BASF SE, 67056 Ludwigshafen (DE)
(72) Erfinder: BOYMOND, Laure, F-78000 Versailles (FR); ROTTLÄNDER, Mario, D-35039 Marburg (DE); CAHIEZ, Gérard, F-75003 Paris (FR); KNOCHEL, Paul, D-35037 Marburg (DE)
(86) Internationale Anmeldenummer: PCT/EP1999/002275
(87) Internationale Veröffentlichungsnummer: WO 1999/051609

(56) Entgegenhaltungen:
- WO-A-97/05110
- EVANS, D.F. ET AL.: "studies on grignard reagents. part i. fluorine nuclear magnetic resonance spectra of fluoroaryl graignard reagents" J. CHEM. SOC. (A),1967, Seiten 1643-1648, XP002106079
- KABALKA, G.W. ET AL.: "synthesis of aromatic amines using allyl azide" TETRAHEDRON LETTERS, Bd. 38, Nr. 33, 1997, Seiten 5777-5778, XP004085869
- CHEMICAL ABSTRACTS, vol. 86, no. 1, 3. Januar 1977 Columbus, Ohio, US; abstract no. 5381k, BUSCH, N. ET AL.: "tetrahydro-1,4-oxazines. I. New synthesis method and a study of their interaction with tryptaminergic D receptors" XP002106081 & EUR. J. MED. CHEM.-CHIM. THER., Bd. 11, Nr. 3, 1976, Seiten 201-207,
- CHEMICAL ABSTRACTS, vol. 118, no. 17, 26. April 1993 Columbus, Ohio, US; abstract no. 168831a, IKOMA, Y. ET AL.: "preparation of benzene- and/or thiophene-containing unsymmetrical tricyclic compounds by cross-coupling of grignard reagents with dihalogenated cyclic compounds" XP002106082 & JP 04 282326 A (YUKI GOSEI KOGYO CO., LTD.)

## Beschreibung

Die Erfindung betrifft ein Verfahren zur Herstellung von Grignardverbindungen der Formel I. Die Erfindung betrifft außerdem Verbindungen der Formel I sowie polymergebundene Verbindungen der Formel Ia gemäß den Ansprüchen. Weiterhin betrifft die Erfindung die Verwendung des Verfahrens zur Herstellung von Substanzbibliotheken.

Grignardverbindungen sind wertvolle Zwischenstufen in der organischen Synthese. Sie gehören zu den wichtigsten Verbindungsklassen in der organischen Synthesechemie. Ihre Umsetzung mit elektrophilen Substanzen erlaubt die Herstellung der unterschiedlichsten Verbindungen. Aus der Literatur sind eine Vielzahl von Synthesen bekannt, in denen Grignardverbindungen verwendet werden (siehe: Handbook of Grignard-Reagents, Eds. G.S. Silverman, P.E. Rakita, Marcel Dekker, Inc., 1996). Grignardverbindungen besitzen eine gute Reaktivität bei befriedigender Chemoselektivität (siehe Posner G. H. Org. React., Vol. 22, 1975: 253, Lipshutz et al., Org. React., Vol. 41, 1992: 135, Luh T.-Y. Chem. Res., Vol 24, 1991: 257 oder Tamao et al., J. Am. Chem. Soc., Vol, 94, 1972: 4374). In DE 196 32 643 wird beispielsweise die Synthese von Zwischenprodukten für Angiotensin-II-Inhibitoren über eine Grignardverbindung beschrieben. DE 25 41 438 und DE 19 64 405 beschreiben die Synthese von Riechstoffen über Grignardsynthesen beispielsweise für die Kosmetik.

In der deutschen Anmeldung (Aktenzeichen 19709118.0) wird die Synthese von Pflanzenwirkstoffen mittels einer Grignardverbindung, die als Substituenten Thioalkylether oder Halogen trägt, beschrieben

Üblicherweise werden sie gemäß Schema I hergestellt, indem ein entsprechendes Alkyl- oder Arylhalogenid mit metallischem Magnesium oder einer anderen Magnesiumquelle umgesetzt wird. Die Methoden hierzu sind dem Fachmann bekannt und können in Handbook of Grignard-Reagents, Eds. G.S. Silverman, P.E. Rakita, Marcel Dekker, Inc., 1996 nachgelesen werden.

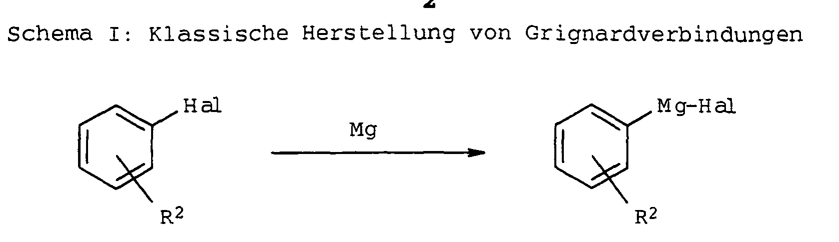

All diesen Umsetzungen ist jedoch gemeinsam, daß sie unter recht drastischen Reaktionsbedingungen (Temperaturen > 0°C, zumeist sogar bei Temperaturen > +40°C durchgeführt werden. Diese Bedingungen erlauben es aber nicht, daß weitere funktionelle Gruppen wie Ester oder Nitrilgruppen, die mit einer Grignardverbindung als Elektrophil reagieren können, im Molekül enthalten sind, da es unter diesen Bedingungen dann zur Oligomerisierung, Reduktion oder anderen Nebenreaktionen kommen würde.

In Bull. Soc. Chim. Fr. 1967, 1520, Angew. Chem., Vol.81, 1969: 293., J. Organomet. Chem., C21 G, 1971: 33, J. Organomet. Chem. Vol. 113, 1976: 107 und J. Organomet. Chem. Vol. 54, 1973: 123 wird die Herstellung von Arylgrignardverbindungen durch Halogen-Magnesiumaustausch beschrieben.

Die dort angewendeten Bedingungen und Reagentien erlauben es aber nicht, Grignardverbindungen mit funktionellen Gruppen wie Estern, Nitrile oder Amide herzustellen, die mit einem Elektrophil reagieren.

So wird beispielsweise in J. Organomet. Chem., Vol. 113, 1976: 107 die Herstellung des 2-Pyridyl-magnesiumbromids (XI) ausgehend von Phenylmagnesiumbromid (VII) und 2-Chlorpyridin (VIII) gemäß Schema II beschrieben.

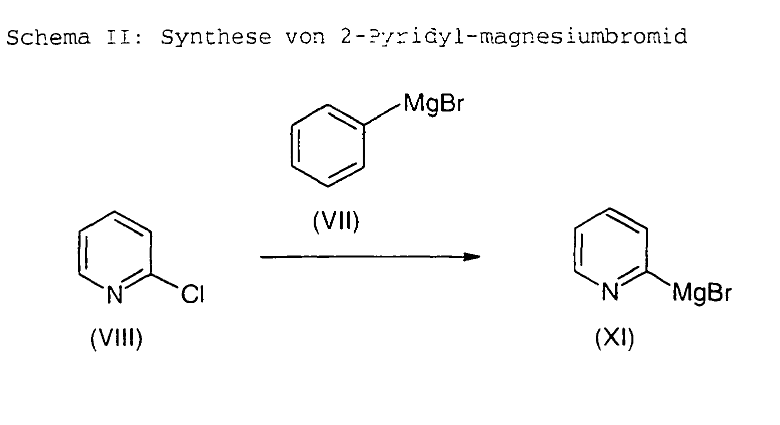

Die Reaktionsbedingungen sind jedoch dergestalt, daß funktionelle Gruppen im Molekül sofort umgesetzt werden würden.

Daher ist die einfache Herstellung von Grignardverbindungen, die funktionelle Gruppen, die mit Elektrophilen reagieren, enthalten, bisher nicht bekannt.

Aufgabe der vorliegenden Erfindung war es, ein Verfahren zur Synthese von Grignardverbindungen bereitzustellen, die für die weitere vielfältige chemische Synthese weitere funktionelle Gruppen enthalten, die mit Elektrophilenreagentien reagieren können.

Diese Aufgabe wurde durch ein Verfahren zur Herstellung von Verbindungen der allgemeinen Formel I 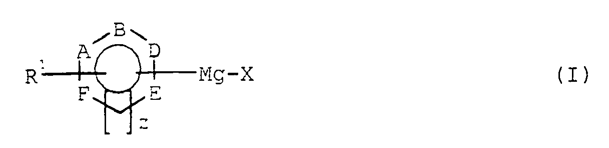 dadurch gekennzeichnet, daß man Verbindungen der allgemeinen Formel II 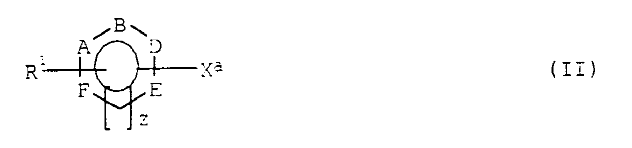 mit Verbindungen der Formel R⁴MgX (III) bei Temperaturen kleiner 0°C umsetzt,
wobei die Substituenten und Variablen in den Formeln I, II und III folgende Bedeutung haben:
- Z =: 0,1
- X =: Halogen wie Cl, Br, 1 R²
- X^{a} = =: Br, I
- A, B, D und E: unabhängig voneinander CH, CR², N, P oder CR³
- F =: O, S, NR⁶, CR² oder CR³ wenn z = 0, oder CH, CR², N, P oder CR³, wenn n = 1,
wobei zwei benachbarte Variablen A, B, D, E oder F zusammen einen weiteren substituierten oder unsubstituierten aromatischen, gesättigten oder teilweise gesättigten Ring mit 5 bis 8 Atomen im Ring bilden können, der ein oder mehrere Heteroatome wie O, N, S, P enthalten kann und wobei nicht mehr als drei der Variablen A, B, D, E oder F ein Heteroatom sind, gelöst,

Vorzugsweise bedeuten nicht mehr als drei der Variablen A, B, D, E oder F gleichzeitig Stickstoff in den Verbindungen der Formeln I, Ia und II. Ist z = 0, so können vorteilhaft weitere Heteroatome wie Sauerstoff oder Schwefel zusätzlich zum Stickstoff oder anstelle des Stickstoffs im Ring enthalten sein, wobei maximal ein Schwefel- oder Sauerstoffatom im 5-Ring enthalten sein können. Beispielhaft seien 5-Ringheterozyklen mit Grundkörpern wie Pyrrol, Pyrazol, Imidazol, Triazol, Oxazol, Isoxazol, Isothiazol, Thiazol, Furazan, Oxadiazol, Thiooxazol, Thiophen oder Furan genannt. Für 6-Ringneterozyklen seien Zyklen mit Grundkörpern wie Pyridin, Pyrimidin, Pyrazin, Pyridazin oder Triazin beispielhaft genannt. Sowohl für z = 0 als auch für z = 1 kann ein Phosphoratom vorteilhaft im Ring als alleiniges Heteroatom enthalten sein.
- R¹ =: COOR², CN, CONR³R^{3'}, Halogen
- R² =: substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl-, R⁵,
- R³ =: Wasserstoff, substituiertes oder unsubstituiertes, verzweigtes oder unverzweigtes -OC₁-C₁₀-Alkyl, -OC₃-C₁₀-Cycloalkyl, -OC₁-C₄-Alkylaryl, -OC₁-C₄-Alkylhetaryl, R^{3'} oder R⁵,
- R^{3'} =: Wasserstoff, substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl-, R⁵,
- R⁴ =: substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl- oder Halogen wie Cl, Br, J, bevorzugt Br oder J,
- R⁵ =: ein fester Träger, bevorzugt eine polymere Schutzgruppe,
- R⁶ =: substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl-, substituiertes oder unsubstituiertes, verzweigtes oder unverzweigtes -(C=O)-C₁-C₁₀-Alkyl, -(C=O)-C₃-C₁₀-Cycloalkyl, -(C=O)-C₁-C₄-Alkylaryl, -(C=O)-C₁-C₄-Alkylhetaryl oder -SO₂-Aryl.

R¹ bezeichnet in den Verbindungen der Formeln I und II COOR², CN, CONR³R^{3'}, Halogen wie F, Cl.

R² bezeichnet in den Verbindungen der Formeln I und II substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl- oder R⁵,

Als Alkylreste seien substituierte oder unsubstituierte verzweigte oder unverzweigte C₁-C₁₀-Alkylketten wie beispielsweise Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl oder n-Decyl genannt.

Als Cycloalkylreste in der Formel seien beispielhaft substituierte oder unsubstituierte verzweigte oder unverzweigte C₃-C₁₀-Cycloalkylreste mit 3 bis 7 Kohlenstoffatomen im Ring oder Ringsystem wie Cyclopropyl, Cyclobutyl, Cyclopentyl, Cyclohexyl, Cycloheptyl, 1-Methylcyclopropyl, 1-Ethylcyclopropyl, 1-Propylcyclopropyl, 1-Butylcyclopropyl, 1-Pentylcyclopropyl, 1-Methyl-1-Butylcyclopropyl, 1,2-Dimethylcyclopropyl, 1-Methyl-2-Ethylcyclopropyl, Cyclooctyl, Cyclononyl oder Cyclodecyl genannt. Die Cycloalkylreste können auch Heteroatome wie S, N und O im Ring enthalten.

Als C₁-C₄-Alkylaryl seihen substituierte und unsubstituierte verzweigtkettige oder unverzweigtkettige C₁-C₄-Alkyl-phenyl- oder C₁-C₄-Alkyl-naphthylreste wie Methylphenyl, Ethylphenyl, Propylphenyl, 1-Methylethylphenyl, Butylphenyl, 1-Methylpropylphenyl, 2-Methylpropylphenyl, 1,1-Dimethylethylphenyl, Methylnaphthyl, Ethylnaphthyl, Propylnaphthyl, 1-Methylethylnaphthyl, Butylnaphthyl, 1-Methylpropylnaphthyl. 2-Mechylpropylnaphthyl oder 1,1-Dimethylethylnaphthyl genannt.

Als Alkylhetarylreste seien substituierte und unsubstituierte verzweigtkettige oder unverzweigtkettige C₁-C₄-Alkylhetarylreste, die ein oder mehrere Stickstoff-, Schwefel- und/oder Sauerstoffatome im Ring oder Ringsystem enthalten, genannt.

R² kann auch ein fester Träger R⁵ sein (Definition des Trägers siehe unten).

Als Substituenten der genannten Reste von R² kommen prinzipiell bis auf Ketone oder Aldehyde alle denkbaren Substituenten in Frage beispielsweise ein oder mehrere Substituenten wie Halogen wie Fluor, Chlor oder Brom, Cyano, Nitro, Amino, Hydroxy, Alkyl, Cycloalkyl, Aryl, Alkoxy, Benzyloxy, Phenyl oder Benzyl.

R³ bezeichnet im Substituent R¹ Wasserstoff, substituiertes oder unsubstituiertes, verzweigtes oder unverzweigtes -OC₁-C₁₀-Alkyl-, -OC₃-C₁₀-Cycloalkyl-, -OC₁-C₄-Alkylaryl-, -OC₁-C₄-Alkylhetaryl-, R^{3'} oder R⁵.
Als -O-Alkylreste seien substituierte oder unsubstituierte verzweigte oder unverzweigte -OC₁-C₁₀-Alkylketten (= Alkylhydroxamsäuren, Bindung über den Sauerstoff) genannt. In diesen -O-Alkylresten haben die C₁-C₁₀-Alkylketten folgende Bedeutung Methyl, Ethyl, n-Propyl, 1-Methylethyl, n-Butyl, 1-Methylpropyl-, 2-Methylpropyl, 1,1-Dimethylethyl, n-Pentyl, 1-Mechylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl oder n-Decyl.

Als -O-Cycloalkylreste im Rest R³ seihen beispielhaft substituierte oder unsubstituierte verzweigte oder unverzweigte -OC₃-C₁₀-Cycloalkylreste mit 3 bis 7 Kohlenstoffatomen im Ring oder Ringsystem genannt, wobei die C₃-C₁₀-Cycloalkylreste folgende Bedeutung haben: Cyclopropyl, Cyclobutyl, Cyclopentyl, Cyclohexyl, Cycloheptyl, 1-Methylcyclopropyl, 1-Ethylcyclopropyl, 1-Propylcyclopropyl, 1-Butylcyclopropyl, 1-Pentylcyclopropyl, 1-Methyl-1-Bucylcyclopropyl, 1,2-Dimethylcyclopropyl, 1-Methyl-2-Ethylcyclopropyl, Cyclooctyl, Cyclononyl oder Cyclodecyl. Die Cycloalkylreste können auch Heteroatome wie S, N und O im Ring enthalten.

Als -O-C₁-C₄-Alkylaryl seihen substituierte und unsubstituierte verzweigtkettige oder unverzweigtkettige -O-C₁-C₄-Alkylarylreste genannt, wobei die C₁-C₄-Alkylarylreste folgende Bedeutung haben: C₁-C₄-Alkyl-phenyl- oder C₁-C₄-Alkyl-naphthylreste wie Methylphenyl, Ethylphenyl, Propylphenyl, 1-Methylethylphenyl, Butylphenyl, 1-Methylpropylphenyl, 2-Methylpropylphenyl, 1,1-Dimethylethylphenyl, Methylnaphthyl, Ethylnaphthyl, Propylnaphthyl, 1-Methylethylnaphthyl, Butylnaphthyl, 1-Methylpropylnaphthyl, 2-Methylpropylnaphthyl oder 1,1-Dimethylethylnaphthyl.

Als -O-Alkylhetarylreste seien substituierte und unsubstituierte verzweigtkettige oder unverzweigtkettige -O-C₁-C₄-Alkylhetarylreste, die ein oder mehrere Stickstoff-, Schwefel- und/oder Sauerstoffatome im Ring oder Ringsystem enthalten, genannt.

R³ kann auch ein fester Träger R⁵ sein (Definition des Trägers siehe unten) oder R³'.

Alle vorstehend genannten Reste des Substituenten R³ sind über den Sauerstoff gebunden und bilden im Falle des unter R¹ genannten Restes CONR³R^{3'} sogenannte Hydroxamsäuren, ansonsten Ether. Als Substituenten der genannten Reste von R³ kommen prinzipiell bis auf Ketone oder Aldehyde alle denkbaren Substituenten in Frage beispielsweise ein oder mehrere Substituenten wie Halogen wie Fluor, Chlor oder Brom, Cyano, Nitro, Amino, Hydroxy, Alkyl, Cycloalkyl, Aryl, Alkoxy, Benzyloxy, Phenyl oder Benzyl.

R^{3'} bezeichnet im Substituent R¹ Wasserstoff, substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl-, R^{3'} oder R⁵.

Als Alkylreste seien substituierte oder unsubstituierte verzweigte oder unverzweigte C₁-C₁₀-Alkylketten wie beispielsweise Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethyl, 2,2-Dimethylbutyl 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl oder n-Decyl genannt.

Als Cycloalkylreste in der Formel seihen beispielhaft substituierte oder unsubstituierte verzweigte oder unverzweigte C₃-C₁₀-Cycloalkylreste mit 3 bis 7 Kohlenstoffatomen im Ring oder Ringsystem wie Cyclopropyl, Cyclobutyl, Cyclopentyl, Cyclohexyl, Cycloheptyl, 1-Methylcyclopropyl, 1-Ethylcyclopropyl, 1-Propylcyclopropyl, 1-Butylcyclopropyl, 1-Pentylcyclopropyl, 1-Methyl-1-Butylcyclopropyl, 1,2-Dimethylcyclypropyl, 1-Methyl-2-Ethylcyclopropyl, Cyclooctyl, Cyclononyl oder Cyclodecyl genannt. Die Cycloalkylreste können auch Heteroatome wie S, N und O im Ring enthalten.

Als C₁-C₄-Alkylaryl seihen substituierte und unsubstituierte verzweigtkettige oder unverzweigtkettige C₁-C₄-Alkyl-phenyl- oder C₁-C₄-Alkyl-naphthylreste wie Methylphenyl, Ethylphenyl, Propylphenyl, 1-Methylethylphenyl, Butylphenyl, 1-Methylpronylphenyl, 2-Methylpropylphenyl, 1,1-Dimethylethylphenyl, Methylnaphthyl, Ethylnaphthyl, Propylnaphthyl, 1-Methylethylnaphthyl, Butylnaphthyl, 1-Methylpropylnaphthyl, 2-Methylpropylnaphthyl oder 1,1-Dimethylethylnaphthyl genannt.

Als Alkylhetarylreste seien substituierte und unsubstituierte verzweigtkettige oder unverzweigtkettige C₁-C₄-Alkylhetarylreste, die ein oder mehrere Stickstoff-, Schwefel- und/oder Sauerstoffatome im Ring oder Ringsystem enthalten, genannt.

R^{3'} kann auch ein fester Träger R⁵ sein (Definition des Trägers siehe unten).

Als Substituenten der genannten Reste von R^{3'} kommen prinzipiell bis auf Ketone oder Aldehyde alle denkbaren Substituenten in Frage beispielsweise ein oder mehrere Substituenten wie Halogen wie Fluor, Chlor oder Brom, Cyano, Nitro, Amino, Hydroxy, Alkyl. Cycloalkyl, Aryl, Alkoxy, Benzyloxy, Phenyl oder Benzyl.

R⁴ bezeichnet in der Formel R⁴MgX (III) substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl- oder Halogen wie Chlor, Brom oder und, bevorzugt Brom oder Jod.

Als Alkylreste seien substituierte oder unsubstituierte verzweigte oder unverzweigte C₁-C₁₀-Alkylketten wie beispielsweise Methyl, Ethyl, n-Propyl, 1-Ketnylethyl, n-Butyl, 1-Methylpropyl-2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl 1,1-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl. 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl oder n-Decyl genannt.

Als Cycloalkylreste in der Formel seihen beispielhaft substituierte oder unsubstituierte verzweigte oder unverzweigte C₃-C₁₀-Cycloalkylreste mit 3 bis 7 Kohlenstoffatomen im Ring oder Ringsystem wie Cyclopropyl, Cyclobutyl, Cyclopentyl, Cyclohexyl, Cycloheptyl, 1-Methylcyclopropyl, 1-Ethylcyclopropyl, 1-Propylcyclopropyl, 1-Butylcyclopropyl, 1-Pentylcyclopropyl, 1-Methyl-1-Butylcyclopropyl, 1,2-Dimethylcyclopropyl, 1-Methyl-2-Ethylcyclopropyl, Cyclooctyl, Cyclononyl oder Cyclodecyl genannt. Die Cycloalkylreste können auch Heteroatome wie S, N und O im Ring enthalten.

Als C₁-C₄-Alkylaryl seihen substituierte und unsubstituierte verzweigtkettige oder unverzweigtkettige C₁-C₄-Alkyl-phenyl- oder C₁-C₄-Alkyl-naphthylreste wie Methylphenyl, Ethylphenyl, Propylphenyl, 1-Methylethylphenyl, Butylphenyl, 1-Methylpropylphenyl, 2-Methylpropylphenyl, 1,1-Dimethylethylphenyl, Methylnaphthyl, Ethylnaphthyl, Propylnaphthyl, 1-Methylethylnaphthyl, Butylnaphthyl, 1-Methylpropylnaphthyl, 2-Methylpropylnaphthyl oder 1,1-Dimethylethylnaphthyl genannt.

Als Alkylhetarylreste seien substituierte und unsubstituierte verzweigtkettige oder unverzweigtkettige C₁-C₄-Alkylhetarylreste, die ein oder mehrere Stickstoff-, Schwefel- und/oder Sauerstoffatome im Ring oder Ringsystem enthalten, genannt.

Als Substituenten der genannten Reste von R⁴ kommen prinzipiell bis auf Ketone oder Aldehyde alle denkbaren Substituenten in Frage beispielsweise ein oder mehrere Substituenten wie Halogen wie Fluor, Chlor oder Brom, Cyano, Nitro, Amino, Hydroxy, Alkyl, Cycloalkyl, Aryl, Alkoxy, Benzyloxy, Phenyl oder Benzyl.

R⁶ bezeichnet substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhecaryl-, substituiertes oder unsubstituiertes, verzweigtes oder unverzweigtes -(C=O)-C₁-C₁₀-Alkyl, -(C=O)-C₃-C₁₀-Cycloalkyl, -(C=O)-C₁-C₄-Alkylaryl, -(C=O)-C₁-C₄-Alkylhetaryl oder -SO₂-Aryl.

Als Alkylreste seien substituierte oder unsubstituierte verzweigte oder unverzweigte C₁-C₁₀-Alkylketten wie beispielsweise Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl oder n-Decyl genannt.

Als Cycloalkylreste in der Formel seihen beispielhaft substituierte oder unsubstituierte verzweigte oder unverzweigte C₃-C₁₀-Cycloalkylreste mit 3 bis 7 Kohlenstoffatomen im Ring oder Ringsystem wie Cyclopropyl, Cyclobutyl, Cyclopentyl, Cyclohexyl, Cycloheptyl, 1-Methylcyclopropyl, 1-Ethylcyclopropyl, 1-Propylcyclopropyl, 1-Butylcyclopropyl, 1-Pentylcyclopropyl, 1-Methyl-1-Butylcyclopropyl, 1,2-Dimethylcyclopropyl, 1-Methyl-2-Ethylcyclopropyl, Cyclooctyl, Cyclononyl oder Cyclodecyl genannt. Die Cycloalkylreste können auch Heteroatome wie S, N und O im Ring enthalten.

Als C₁-C₄-Alkylaryl seihen substituierte und unsubstituierte verzweigtkettige oder unverzweigtkettige C₁-C₄-Alkyl-phenyl- oder C₁-C₄-Alkyl-naphthylreste wie Methylphenyl, Ethylphenyl, Propylphenyl, 1-Methylethylphenyl, Butylphenyl, 1-Methylpropylphenyl, 2-Methylpropylphenyl, 1,1-Dimethylethylphenyl, Methylnaphthyl, Ethylnaphthyl, Propylnaphthyl, 1-Methylethylnaphthyl, Butylnaphthyl, 1-Methylpropylnaphthyl, 2-Methylpropylnaphthyl oder 1,1-Dimethylethylnaphthyl genannt.

Als Alkylhetarylreste seien substituierte und unsubstituierte verzweigtkettige oder unverzweigtkettige C₁-C₄-Alkylhetarylreste, die ein oder mehrere Stickstoff-, Schwefel- und/oder Sauerstoffatome im Ring oder Ringsystem enthalten, genannt.

Als -(C=O)-Alkylreste seien substituierte oder unsubstituierte verzweigte oder unverzweigte -(C=O)-C₁-C₁₀-Alkylketten (= Bindung über den Kohlenstoff an dem über die Doppelbindung der Sauerstoff hängt) genannt. In diesen -(C=O)-Alkylresten haben die C₁-C₁₀-Alkylketten folgende Bedeutung Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl oder n-Decyl.

Als -(C=O)-Cycloalkylreste im Rest R⁶ seihen beispielhaft substituierte oder unsubstituierte verzweigte oder unverzweigte -(C=O)-C₃-C₁₀-Cycloalkylreste mit 3 bis 7 Kohlenstoffatomen im Ring oder Ringsystem genannt, wobei die C₃-C₁₀-Cycloalkylreste folgende Bedeutung haben: Cyclopropyl, Cyclobutyl, Cyclopentyl, Cyclohexyl, Cycloheptyl, 1-Methylcyclopropyl, 1-Ethylcyclopropyl, 1-Propylcyclopropyl, 1-Butylcyclopropyl, 1-Pentylcyclopropyl, 1-Methyl-1-Butylcyclopropyl, 1,2-Dimethylcyclopropyl, 1-Methyl-2-Ethylcyclopropyl, Cyclooctyl, Cyclononyl oder Cyclodecyl. Die Cycloalkylreste können auch Heteroatome wie S, N und O im Ring enthalten.

Als -(C=O)-C₁-C₄-Alkylaryl seihen substituierte und unsubstituierte verzweigtkettige oder unverzweigtkettige -(C=O)-C₁-C₄-Alkylarylreste genannt, wobei die C₁-C₄-Alkylarylreste folgende Bedeutung haben: C₁-C₄-Alkyl-phenyl- oder C₁-C₄-Alkyl-naphthylreste wie Methylphenyl, Ethylphenyl, Propylphenyl, 1-Methylethylphenyl, Butylphenyl, 1-Methylpropylchenyl, 2-Methylpropylphenyl, 1,1-Dimethylethylphenyl, Methylnaphthyl, Ethylnaphthyl, Propylnaphthyl, 1-Methylethylnaphthyl, Butylnaphthyl, 1-Methylpropylnaphthyl, 2-Methylpropylnaphthyl oder 1,1-Dimethylethylnaphthyl.

Als -(C=O)-Alkylhetarylreste seien substituierte und unsubstituierte verzweigtkettige oder unverzweigtkettige -(C=O)-C₁-C₄-Alkylhetarylreste, die ein oder mehrere Stickstoff-, Schwefel- und/oder Sauerstoffatome im Ring oder Ringsystem enthalten, genannt.

Alle genannten -(C=O)-Reste sind über den Kohlenstoff gebunden, der den Sauerstoff über eine Doppelbindung trägt.

Als Reste von R⁶ seien seien weiterhin -SO₂-Arylreste wie -SO₂-Phenyl oder -SO₂-Naphthyl genannt. Die Bindung erfolgt über den SO₂-Rest.

Als Substituenten der genannten Reste von R⁵ kommen prinzipiell bis auf Ketone oder Aldehyde alle denkbaren Substituenten in Frage beispielsweise ein oder mehrere Substituenten wie Halogen wie Fluor, Chlor oder Brom, Cyano, Nitro, Amino, Hydroxy, Alkyl, Cycloalkyl, Aryl, Alkoxy, Benzyloxy, Phenyl oder Benzyl.

Bei den Verbindungen der Formeln I, Ia und II handelt es sich um aromatische Verbindungen.

Das erfindungsgemäße Verfahren wird in der Reaktion vorteilhafterweise so durchgeführt, daß die Verbindung II vorteilhaft in einem inertem, aprotischen Lösungsmittel beispielsweise Ether wie Tetrahydrofuran (= THF), Diethylether, Dioxan, Dimethoxyethan oder Methyl-tert.-butylether (= MTB) bei Temperaturen von kleiner 0°C, bevorzugt kleiner -10°C, besonders bevorzugt kleiner -15°C, ganz besonders bevorzugt bei -40°C oder kleiner mit einer Verbindung der allgemeinen Formel R⁴MgX (III) zu Verbindung der Formel I umgesetzt wird. Prinzipiell können alle dem Fachmann bekannten Verbindungen der Formel R⁴MgX zur Herstellung der Grignardverbindung verwendet werden,bevorzugt werden Diisopropylmagnesium oder Dicyclopentylmagnesium verwendet. Die Reaktion läßt sich allgemein in einem Bereich von -70°C bis 0°C durchführen.

Umsetzungen bei höheren Temperaturen beispielsweise bei 25°C führen zu Nebenprodukten und damit deutlich geringeren Ausbeuten.

Unter diesem milden Bedingungen erfolgt der Halogen-MagnesiumAustausch ohne, daß die gebildeten Grignardverbindungen der Formel II (siehe oben) mit den weiteren im Molekül enthaltenden funktionellen Gruppen reagieren. Die Verbindungen reagieren nur in der gewünschten Weise mit dem Elektrophil (siehe Beispiele in der Tabelle I). Auf diesem Wege sind Umsätze mit dem Elektrophil größer 70%, bevorzugt größer 80%, besonders bevorzugt größer 85% ganz besonders bevorzugt größer 90% möglich.

Die Reaktion ist in der Regel innerhalb von 10 Stunden, bevorzugt innerhalb von 5 Stunden besonders bevorzugt innerhalb von 4 Stunden beendet.

Eine Variante des Verfahrens besteht darin, daß nicht direkt die Dialkylmagnesiumverbindung (III mit R⁴ = R² = X) eingesetzt wird, sondern eine gut zugänglich Grignardverbindung X = Hal, die dann unter den Reaktionsbedingungen entsprechend dem Schlenk Gleichgewicht die Dialkylmagnesiumverbindung bildet, die dann die eigentliche Reaktion eingeht.

Ein besonderer Vorteil dieses Verfahrens ist, daß auch Ester gebundener Alkohole bevorzugt polymer gebundener Alkohole in der gewünschten Weise den Halogen-Magnesiumaustausch eingehen. (Beispiele in Tabelle II)

Die Bindung der Verbindungen der Formel I kann dabei über einen festen Träger (= R⁵), wie sie aus der Festphasen-Peptidsynthese bekannt sind, erfolgen. Nutzbare Träger können, soweit sie mit der verwendeten Synthesechemie kompatibel sind aus einer Vielzahl von Materialien bestehen, wobei die Größe, Größenverteilung und Form der Träger je nach Material in weitem Rahmen variieren kann. Bevorzugt werden sphärische Partikel, die vorteilhafterweise in ihrer Größenverteilung homogen sind.

Geeignete feste Träger sind beispielsweise Keramik, Glas, Latex, funktionalisierte quervernetzte Polystyrole, Polyacrylamide, Silicagele, oder Harze.

Um eine Anknüpfung des Reaktanten bzw. eine Abspaltung des Syntheseproduktes nach der Synthese zu ermöglichen, muß der Träger geeignet funktionalisiert oder mit einem Linker versehen sein, der eine entsprechende funktionelle Gruppe besitzt, die eine Anbindung der erfindungsgemäßen Verbindungen ermöglicht. Bevorzugt geeignete Träger bzw. Träger-Linker-Konjugate sind beispielsweise Chlorbenzylharz (Merrifieldharz), Rink-Harz (Novabiochem), Sieber-Harz (Novabiochem), Wang-Harz (Bachem), Tentagel-Harze (Rapp-Polymere), Pega-Harz (Polymer Laboratories) oder Polyacrylamide. Besonders bevorzugt ist als Träger Hydroxybenzylharz (Wang-Harz). Ganz besonders bevorzugt sind als polymere Träger bzw. Schutzgruppen beispielsweise Triphenylmethyl, p-Benzyloxybenzylalkohol, 4-(2',4'-Dimethoxyphenyl-hydroxymethyl)phenoxy-polystyrol oder 4-(2',4'-Dimethoxyphenyl-methyl)-phenoxy-polystyrol.
Die Anbindung der Verbindung an den Träger bzw. polymeren Träger erfolgt über dem Fachmann bekannte Reaktionen, die beispielsweise aus dem Review von Balkenhohl et al. (Angew. Chem., Vol. 108, 1996: 2436) und der dort zitierten Literatur zu entnehmen sind. Im Falle von Wang-Harz kann die Anbindung beispielsweise über einen Ester erfolgen. Dieser kann nach abgeschlossener Synthese mit beispielsweise Trifluoressigsäure vom Harz abgespalten werden.

Auf diese Weise lassen sich die Vorteile der Festphasensynthese, nämlich die automatische Durchführung und Aufarbeitung der Reaktion durch einfaches Waschen und Filtern, nutzen. Unter Verwendung des erfindungsgemäßen Verfahrens lassen sich so leicht Substanzbibliotheken herstellen.

Damit ist diese Reaktion sehr gut geeignet, um nach den Prinzipien der Kombinatorischen Chemie bzw. des HSA Substanzbibliotheken zu erzeugen (Angew. Chem., Vol. 108, 1996: 2436), indem zuerst der Halogen-Magnesiumaustausch an einem Polymer gebundenen Edukt durchgeführt wird und dieses dann mit einer Vielzahl von Elektrophilen (in einem Gefaß Erzeugung von Mischungen) umgesetzt wird

Nach Waschen und Filtern werden die Zielprodukte dann unter Bedingungen, die zur Spaltung der Linker-Bindung geeignet sind, von Polymer abgelöst.

Die folgenden Beispiele sollen das Verfahren veranschaulichen ohne eine Einschränkung der Methode zu bedeuten:

### Beispiele:

### A Darstellung von 4-(1-hydroxybenzyl)benzoesäureethylester.

Eine Lösung von 552 mg (2 mmol) 4-Iod-benzoesäurethylester in 20 ml THF wurde auf -40°C abgekühlt und 1.06 mmol Diisopropylmagnesium in Methyl-tert.-butylether zugegeben. Nach 1 h bei -40°C wurden 233 mg (2.2 mmol) zugegeben. Nach 3 h wurde die Reaktionsmischung hydrolysiert und die org. Phase eingeengt. Chromatographie des Rohproduktes mit Pentan/Ether 4/1 ergab 460 mg (90 %) des Alkohols

Tabelle I gibt die Ergebnisse analoger Umsetzungen mit verschiedenen Elektrophilen wieder.

Die Ausgangsverbindungen (Grignardverbindungen) wurden innerhalb einer halben bis zu einer Stunde über einen Iod-Magnesiumaustausch hergestellt. Die Temperatur der Reaktionslösung lag zwischen -25 und -40°C. Bei dieser Temperatur konnten gute Umsätze erzielt werden. Durch Benutzung von cPent2Mg für die Iod-Magnesiumaustauschreaktion lassen sich die Ausbeuten steigern (siehe Angaben in Klammern).

Die in Tabelle I angegebenen Umsätze beziehen sich auf chemisch reines Endprodukt. Die Allylierungsreaktionen wurden in Gegenwart von CuCN x 2 LiCl (10 mol%) durchgeführt (siehe z.B. Nr. 4-7 und 9, 10 und 13).

**Tabelle I: Herstellung von Grignardverbindungen und Umsetzung mit Elektrophilen.**

| Nr. | Arylhalogenid | Elektrophil | Produkt | Ausbeute (%) |
|---|---|---|---|---|
| 1 | 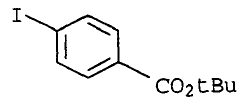 | PhCHO | 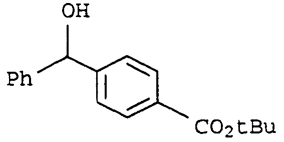 | 91 (94) |
| 2 | 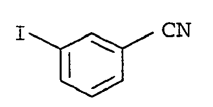 | PhCHO | 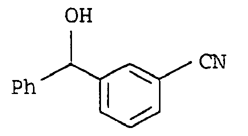 | 89 |
| 3 | 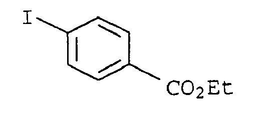 | PhCHO | 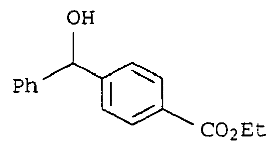 | 90 |
| 4 | 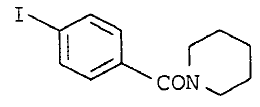 | 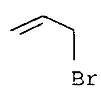 | 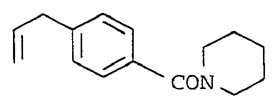 | 81 |
| 5 | 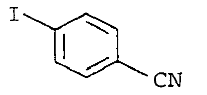 | 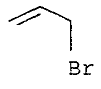 | 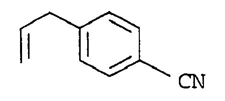 | 75 |
| 6 | 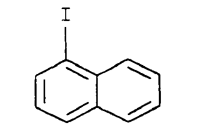 | 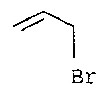 | 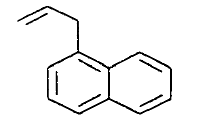 | 80 (87) |
| 7 | 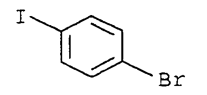 | 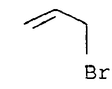 | 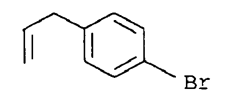 | 79 |
| 8 | 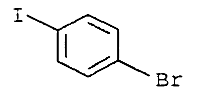 | PhCHO | 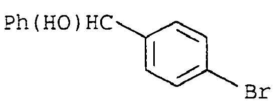 | 93 |
| 9 | 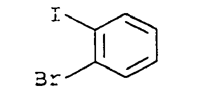 | 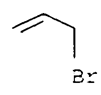 | 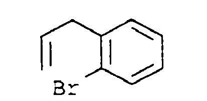 | 79 |
| 10 | 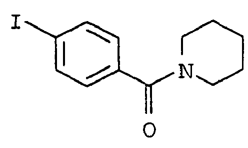 | 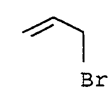 | 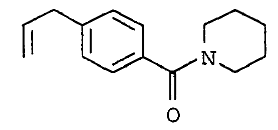 | 81 |
| 11 | 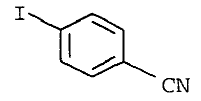 | PhCHO | 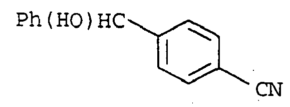 | 94 |
| 12 | 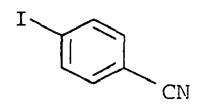 | HexCHO | 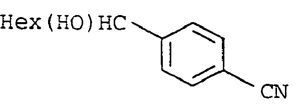 | 74 |
| 13 | 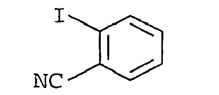 | 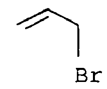 | 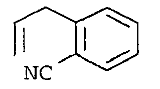 | 89 |

### B. Herstellung von Grignardverbindungen am Polymeren Träger und Umsetzung mit Elektrophilen.

100 mg Wang-Harz wurden mit 70 mmol 4-Iodbenzoesäure und 2 ml THF versetzt und auf -35 5C abgekühlt. Es wurden 0.7 ml (0.51 mmol) einer 0.73 M Lösung von Diisopropylmagnesium in THF zugetropft und nach 15 min. 0.7 ml einer 1 M Lösung von CuCN*2LiCl in THF. Danach wurden 0.3 ml Allylbromid zugegeben und 1 h gerührt.

Filtration und Waschen lieferte das Polymer gebundene Produkt, das unter Standardbedingungen (Trifluoressigsäure) vom Polymer abgelöst wurde.

Analog wurden die in Tabelle II aufgeführten Substanzen hergestellt. Die Ausbeute an freiem Produkt betrug in der Regel 90% oder mehr (siehe Angaben in der Tabelle, Spalte 5).

**Tabelle II: Herstellung von Grignardverbindungen und Umsetzung mit Elektrophilen an festem Träger.**

| Nr. | Arylhalogenid | Elektrophil | Produkt (polymergebunden) | Produkt (vom Polymer abgespalten) |
|---|---|---|---|---|
| 1 | 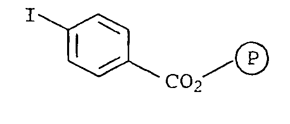 | 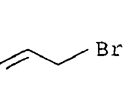 | 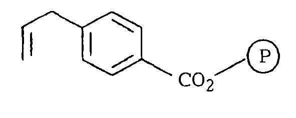 | 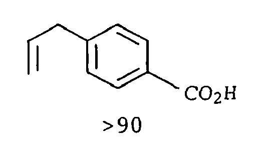 |
| 2 | 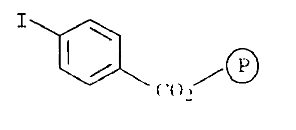 | 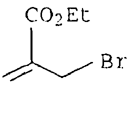 | 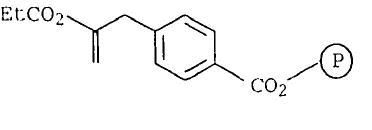 | 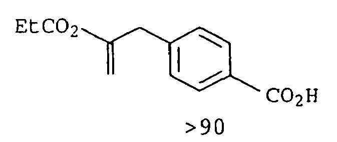 |
| 3 | 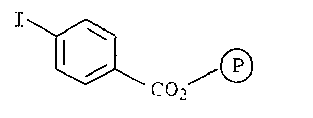 | PhCHO | 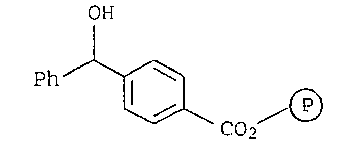 | 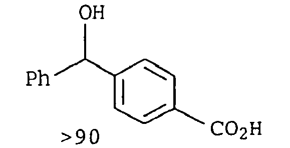 |
| 4 | 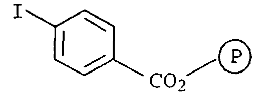 | TosCN | 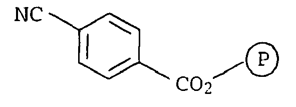 | 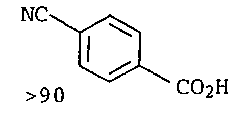 |
| 5 | 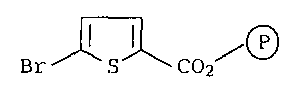 | TosCN | 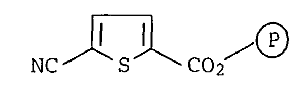 | 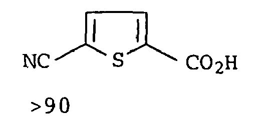 |
| 6 | 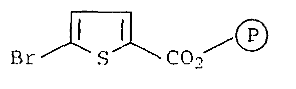 | 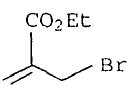 | 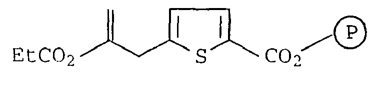 | 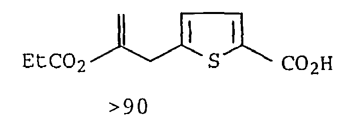 |
| | 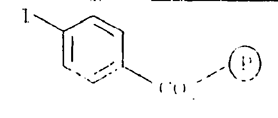 | PhSSPh | 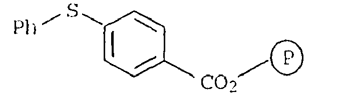 | 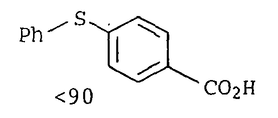 |
| 8 | 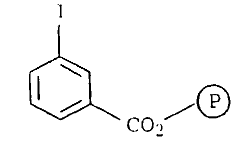 | PhSSPh | 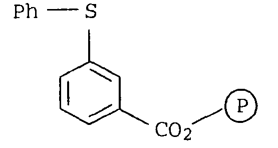 | 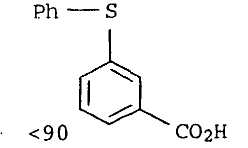 |
| 9 | 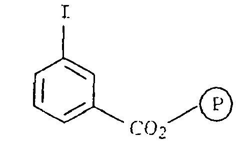 | TosCN | 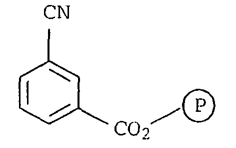 | 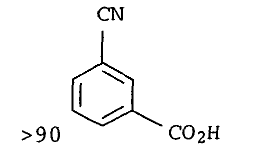 |
| 10 | 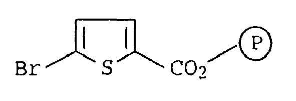 | 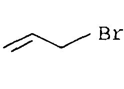 | 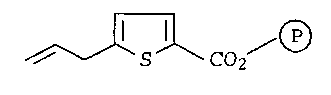 | 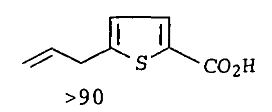 |
| 11 | 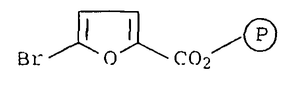 | TosCN | 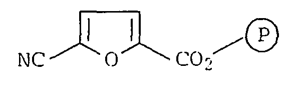 | 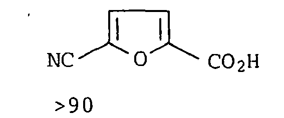 |

## Patentansprüche

1. Verfahren zur Herstellung von Verbindungen der allgemeinen Formel I 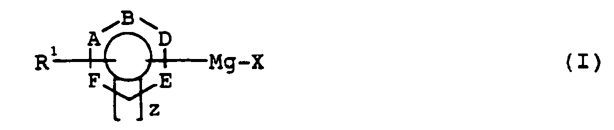 **dadurch gekennzeichnet, daß** man Verbindungen der allgemeinen Formel II 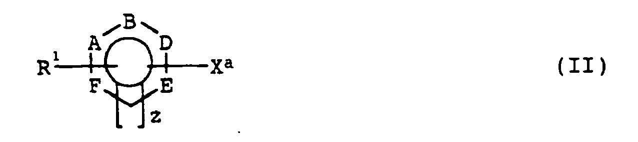 mit Verbindungen der Formel R⁴MgX (III) bei Temperaturen kleiner 0°C umsetzt,
wobei die Substituenten und Variablen in den Formeln I, II und III folgende Bedeutung haben:
Z = 0,1
X = Halogen, R²
X^{a} = Br, I
A, B, D und E unabhängig voneinander CH, CR², N, P oder CR³
F = O, S, NR⁶, CR² oder CR³, wenn z = 0, oder CH, CR², N, P oder CR³, wenn z = 1,
wobei zwei benachbarte Variablen A, B, D, E oder F zusammen einen weiteren substituierten oder unsubstituierten aromatischen, gesättigten oder teilweise gesättigten Ring mit 5 bis 8 Atomen im Ring bilden können, der ein oder mehrere Heteroatome wie 0, N, S, P enthalten kann und wobei nicht mehr als drei der Variablen A, B, D, E oder F ein Heteroatom sind,
R¹ = COOR², CN, CONR³R^{3'}, Halogen
R² = substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl-, R⁵,
R³ = Wasserstoff, substituiertes oder unsubstituiertes, verzweigtes oder unverzweigtes -OC₁-C₁₀-Alkyl, -OC₃-C₁₀-Cycloalkyl, -OC₁-C₄-Alkylaryl, -OC₁-C₄-Alkylhetaryl, R^{3'} oder R⁵,
R^{3'} = Wasserstoff, substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl-, R⁵,
R⁴ = substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl- oder Halogen,
R⁵ = ein fester Träger,
R⁶ = substituiertes oder unsubstituiertes, verzweigtes oder unverzweigtes C₁-C₁₀-Alkyl-, C₃-C₁₀-Cycloalkyl-, C₁-C₄-Alkylaryl-, C₁-C₄-Alkylhetaryl-, substituiertes oder unsubstituiertes, verzweigtes oder unverzweigtes -(C=O)-C₁-C₁₀-Alkyl, -(C=O)-C₃-C₁₀-Cycloalkyl, -(C=O)-C₁-C₄-Alkylaryl, -(C=O)-C₁-C₄-Alkylhetaryl oder -SO₂-Aryl.

2. Verfahren nach Anspruch 1, **dadurch gekennzeichnet, daß** das Verfahren in einem inertem aprotischen Lösungsmittel durchgeführt wird.

3. Verfahren nach Anspruch 1 oder 2, **dadurch gekennzeichnet, daß** das Verfahren bei Temperaturen kleiner -15°C durchgeführt wird.

4. Verfahren nach den Ansprüchen 1 bis 3, **dadurch gekennzeichnet, daß** die Umsetzung zu Verbindungen der Formel I nach Anspruch 1 innerhalb 10 Stunden beendet ist.

5. Verfahren nach den Ansprüchen 1 bis 4, **dadurch gekennzeichnet, daß** das Verfahren an einem festen Träger (= R⁵) durchgeführt wird.

6. Verbindungen der Formel I 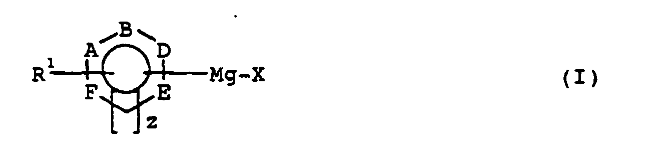 in denen R¹ = COOR², CN oder CONR³R^{3'} bedeutet und die weiteren Variablen und Substituenten die in Anspruch 1 genannte Bedeutung haben.

7. Verbindungen der Formel Ia 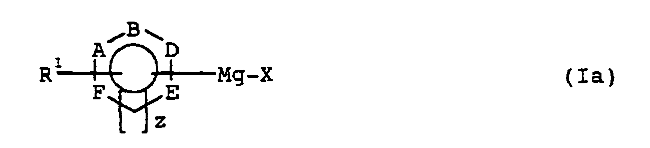 in der die Variablen und Substituenten die in Anspruch 1 genannte Bedeutung haben und mindestens einer der Substituenten R², R³ oder R^{3'} eine polymere Schutzgruppe (= R⁵) ist.

8. Verwendung eines Verfahrens gemäß den Ansprüchen 1 bis 5 zur Herstellung von Substanzbibliotheken.

## Claims

1. A process for preparing compounds of the general formula I 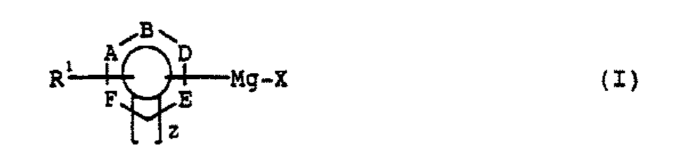 which comprises reacting compounds of the general formula II 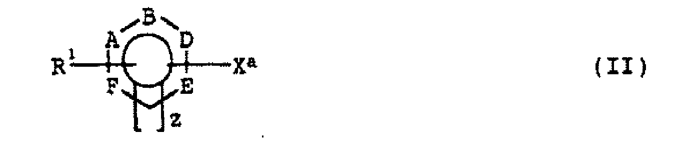 with compounds of the formula R⁴MgX (III) at temperatures below 0°C,
where the substituents and variables in the formulae I, II and III have the following meanings:
Z = 0, 1
X = halogen, R²
X^{a} = Br, I
A, B, D and E independently of one another CH, CR², N, P or CR³
F = O, S, NR⁶, CR² or CR³ when z = 0, or CH, CR², N, P or CR³ when z = 1,
it being possible for two adjacent variables A, B, D, E or F together to form another substituted or unsubstituted aromatic, saturated or partially saturated ring which has 5 to 8 atoms in the ring and which may contain one or more heteroatoms such as 0, N, S, P, and not more than three of the variables A, B, D, E or F being a heteroatom,
R¹ = COOR², CN, CONR³R^{3'}, halogen
R²= substituted or unsubstituted, branched or unbranched C₁-C₁₀-alkyl, C₃-C₁₀-cycloalkyl, C₁-C₄-alkylaryl, C₁-C₄-alkylhetaryl, R⁵,
R³= hydrogen, substituted or unsubstituted, branched or unbranched -OC₁-C₁₀-alkyl, -OC₃-C₁₀-cycloalkyl, -OC₁-C₄-alkylaryl, -OC₁-C₄-alkylhetaryl, R^{3'} or R⁵,
R^{3'} = hydrogen, substituted or unsubstituted, branched or unbranched C₁-C₁₀-alkyl, C₃-C₁₀-cycloalkyl, C₁-C₄-alkylaryl, C₁-C₄-alkylhetaryl, R⁵,
R⁴ = substituted or unsubstituted, branched or unbranched C₁-C₁₀-alkyl, C₃-C₁₀-cycloalkyl, C₁-C₄-alkylaryl, C₁-C₄-alkylhetaryl or halogen,
R⁵ = a solid support,
R⁶ = substituted or unsubstituted, branched or unbranched C₁-C₁₀-alkyl, C₃-C₁₀-cycloalkyl, C₁-C₄-alkylaryl, C₁-C₄-alkylhetaryl, substituted or unsubstituted, branched or unbranched-(C=O)-C₁-C₁₀-alkyl, -(C=O)-C₃-C₁₀-Cycloalkyl,-(C=O) -C₁-C₄-alkylaryl, - (C=O) -C₁-C₄-alkylhetaryl or -SO₂-aryl.

2. A process as claimed in claim 1, which is carried out in an inert aprotic solvent.

3. A process as claimed in claim 1 or 2, which is carried out at temperatures below -15°C.

4. A process as claimed in any of claims 1 to 3, wherein the reaction to give compounds of the formula I as set forth in claim 1 is complete within 10 hours.

5. A process as claimed in any of claims 1 to 4, which is carried out on a solid support (= R⁵).

6. A compound of the formula I 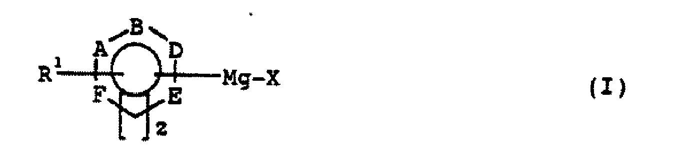 in which R¹ is COOR^{2'} CN or CONR³R^{3'} and the other variables and substituents have the meanings stated in claim 1.

7. A compound of the formula Ia 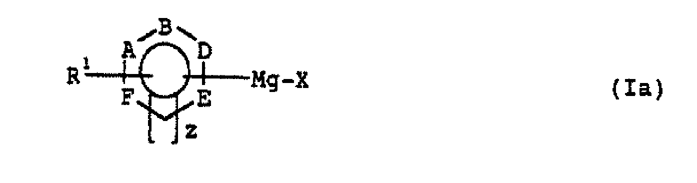 in which variables and substituents have the meanings stated in claim 1, and at least one of the substituents R², R³ or R^{3'} is a polymeric protective group (= R⁵).

8. The use of a process as claimed in any of claims 1 to 5 for preparing substance libraries.

## Revendications

1. Procédé de préparation de composés de la formule générale I 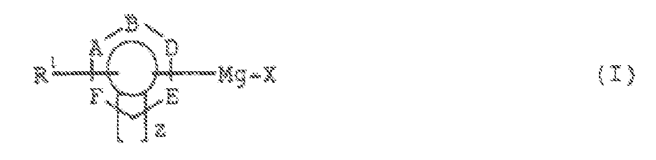 **caractérisé en ce que** l'on fait réagir des composés de la formule générale II 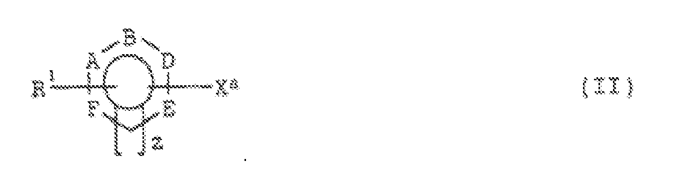 avec des composés de la formule R⁴MgX (III) à des températures inférieures à 0 °C,
les substituants et les variables dans les formules I, II et III ayant la signification suivante :
z = 0, 1
X = halogène, R²
X^{a} = Br, I
A, B, D et E indépendamment l'un de l'autre CH, CR², N, P ou CR³
F = 0, S, NR⁶, CR² ou CR³ lorsque z = 0, ou CH, CR², N, P ou CR³ lorsque z = 1,
deux variables contiguës A, B, D, E ou F pouvant former ensemble un autre cycle substitué ou non substitué, aromatique, saturé ou partiellement saturé avec 5 à 8 atomes dans le cycle, qui peut contenir un ou plusieurs hétéroatomes comme 0, N, S, P et pas plus de trois des variables A, B, D, E ou F étant un hétéroatome,
R¹ = COOR², CN, CONR³R³', halogène
R² = alkyle en C₁-C₁₀, cycloalkyle en C₃-C₁₀, alkylaryle en C₁-C₄, alkylhétaryle en C₁-C₄, R⁵, substitué ou non substitué, ramifié ou non ramifié,
R³ = hydrogène, alkyle en OC₁-C₁₀, cycloalkyle en OC₃-C₁₀, alkylaryle en OC₁-C₄, alkylhétaryle en OC₁-C₄, R^{3'} ou R⁵, substitué ou non substitué, ramifié ou non ramifié,
R^{3'} = hydrogène, alkyle en C₁-C₁₀, cycloalkyle en C₃-C₁₀, alkylaryle en C₁-C₄, alkylhétaryle en C₁-C₄, R⁵, substitué ou non substitué, ramifié ou non ramifié,
R⁴ = alkyle en C₁-C₁₀, cycloalkyle en C₃-C₁₀, alkylaryle en C₁-C₄, alkylhétaryle en C₁-C₄ ou halogène, substitué ou non substitué, ramifié ou non ramifié,
R⁵ = un support rigide,
R⁶ = alkyle en C₁-C₁₀, cycloalkyle en C₃-C₁₀, alkylaryle en C₁-C₄, alkylhétaryle en C₁-C₄ substitué ou non substitué, ramifié ou non ramifié, alkyle en (C=O) -C₁-C₁₀, cycloalkyle en (C=O) -C₃-C₁₀, alkylaryle en (C=O) -C₁-C₄, alkylhétaryle en (C=O) -C₁-C₄ ou aryle-SO₂, substitué ou non substitué, ramifié ou non ramifié.

2. Procédé selon la revendication 1, **caractérisé en ce que** le procédé est réalisé dans un solvant inerte aprotique.

3. Procédé selon la revendication 1 ou 2, **caractérisé en ce que** le procédé est réalisé à des températures inférieures à -15 °C.

4. Procédé selon les revendications 1 à 3, **caractérisé en ce que** la transformation en composés de la formule I selon la revendication 1 est achevée en l'espace de 10 heures.

5. Procédé selon les revendications 1 à 4, **caractérisé en ce que** le procédé est réalisé sur un support rigide (= R⁵).

6. Composés de la formule I 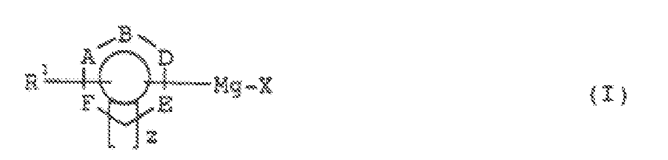 dans laquelle R¹ est COOR², CN ou CONR³R^{3'} et les autres variables et substituants ont la signification citée dans la revendication 1.

7. Composés de la formule la 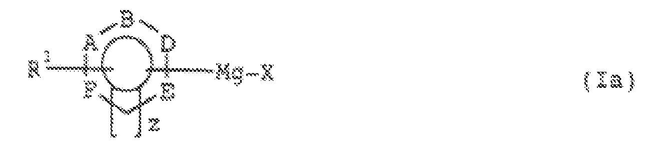 dans laquelle les variables et les substituants ont la signification citée dans la revendication 1 et dans laquelle au moins un des substituants R², R³ ou R^{3'} est un groupe de protection polymère (= R⁵).

8. Utilisation d'un procédé selon les revendications 1 à 5 pour produire des bibliothèques de substances.
